(19) Europäisches Patentamt
European Patent Office
Office européen des brevets

(11) **EP 1 965 227 B1**

(12) **EUROPÄISCHE PATENTSCHRIFT**

(45) Veröffentlichungstag und Bekanntmachung des Hinweises auf die Patenterteilung:
**10.04.2013 Patentblatt 2013/15**

(21) Anmeldenummer: **06742502.5**

(22) Anmeldetag: **15.06.2006**

(51) Int Cl.:
**G01V 3/12** *(2006.01)*

(86) Internationale Anmeldenummer:
**PCT/EA2006/000009**

(87) Internationale Veröffentlichungsnummer:
**WO 2007/068259 (21.06.2007 Gazette 2007/25)**

(54) **VERFAHREN UND EINRICHTUNG ZUR MARINEN ELEKTRISCHEN ERKUNDUNG VON ÖL- UND GASFELDERN**

METHOD AND DEVICE FOR MARINE ELECTRICAL EXPLORATION OF OIL AND GAS FIELDS

PROCEDE ET DISPOSITIF DE PROSPECTION ELECTRIQUE MARINE DE GISEMENTS DE GAZ ET DE PETROLE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.12.2005 RU 2005138935**

(43) Veröffentlichungstag der Anmeldung:
**03.09.2008 Patentblatt 2008/36**

(73) Patentinhaber: **Fugro Consultants International N.V.**
**Willemstad, Curaçao (AN)**

(72) Erfinder:
• **TULUPOV, Andrej Vladimirovich**
**Moscow, 117036 (RU)**
• **LISITSYN, Evgenij Dmitrievich**
**St. Petersburg, 192212 (RU)**

• **PETROV, Alexandr Arkadevich**
**St. Petersburg, 197101 (RU)**
• **KYASPER, Vladimir Eduardovich**
**St. Petersburg, 192283 (RU)**
• **LEGEJDO, Petr Yurevich**
**Irkutsk, 664000 (RU)**

(74) Vertreter: **Hylarides, Paul Jacques**
**Arnold & Siedsma**
**Sweelinckplein 1**
**2517 GK The Hague (NL)**

(56) Entgegenhaltungen:
| | |
|---|---|
| GB-A- 2 390 904 | GB-A- 2 390 904 |
| GB-A- 2 415 785 | RU-C1- 2 236 028 |
| RU-C1- 2 253 881 | RU-C1- 2 253 881 |
| RU-U1- 48 645 | RU-U1- 48 645 |

## Beschreibung

Die Erfindung betrifft ein Verfahren zur elektrischen Erkundung der Öl- und Erdgasfelder im Meer mit im Erkundungsgebiet angeordneten Bodenstationen, wobei im Bereich der Aufstellung der Bodenstationen mit Hilfe einer Generatorleitung ein elektro-magnetisches Feld erzeugt wird und die von den Empfangselektroden der Bodenstationen erfassten Signale aufgenommen werden und wobei die erfassten Signale der Bodenstationen Informationen über den elektrischen Widerstand der Meeresbodengesteine enthalten und darüber die Modellierung des Profils dieser Gesteine und eine Prognose über das Vorhandensein von Kohlenstoff abgeleitet wird und eine Messanlage zur Durchführung des Verfahrens.

## Stand der Technik

Heutzutage werden unterschiedliche Verfahren für die Meereserkundung der Vorkommen der Kohlwasserstoffe weit und breit eingesetzt. Diese Verfahren sind mit der Einwirkung der Impulse des elektromagnetischen Feldes auf den Meeresboden, mit der Erfassung der Veränderungen der elektromagnetischen Daten der Grundgesteine sowie mit der Analyse der ermittelten Daten für das Auffinden der vorhandenen Anomalien und die Bestimmung ihrer Natur verbunden (RU 2236028, 2004; SU 1122998,1984; SU 1798666,1996; SU 1434385, 1988; US 4298840, 1981; US 4617518, 1986). Diese Verfahren werden mit Hilfe von unterschiedlichen komplexen Erkundungsanlagen (Messanlagen, MA) und Ausrüstung durchgeführt.

Bekannt ist eine komplexe Anlage für elektrische Meereserkundung auf einer treibenden Eisscholle. Die Anlage besteht aus den Treiber- und Empfängergeräten, aus einer Quelle der periodischen Wechselstromimpulse und einer Datenverarbeitungseinheit. Bei der Anwendung der Anlage werden die Treiber- und Empfängergeräte vertikal unter der Eisscholle in einer unbeweglichen Wasserschicht angeordnet (RU 2069375, 1993). Die Impulsgabe erfolgt mit Hilfe der Quelle der Wechselstromimpulse mit der Stärke von einigen Dutzenden Ampere mittels des Geräts ERS 72 oder eines anderen Geräts. Die Datenverarbeitung erfolgt durch eine digitale elektrische Erkundungsstation des Typs "Digitale elektrische Erkundungsstation". Das Profilieren des Schnittes erfolgt mit einem vorgegebenen Abstand zwischen den einzelnen Stellen der Signalsendung und des Signalempfangs nach der Einwirkung des Wechselimpulses. Es wird nur die vertikale Komponente des Elektrofelds gemessen. Jedoch kann diese Technik bei der Messung von einem sich bewegenden Schiff nicht verwendet werden, weil es auf der Arbeit mit einer in Bezug auf die Eisscholle unbeweglichen Wasserschicht beruht. Darüber hinaus kann diese Technik nicht bei der Messung in kleinen Tiefen verwendet werden, wo eine freie Drift der Eisscholle verhindert ist. Das Verfahren der induzierten Polarisation (IP) (RU 2236028; SU 1122998; SU 1798666; SU 1434385; US 4298840; US 4617518) ist mehr universell und aussichtsreich. Das Verfahren ermöglicht es, bei der Erzeugung des Profils sowohl Leitfähigkeit als auch Polarisierbarkeit der Gesteine des Meeresbodens zu berücksichtigen. Unter anderem ist eine Anlage (SU 1434385, 1988) bekannt, die aus einer Einspeisungsleitung besteht, die auf dem Boden ausgebreitet wird. Die Länge der Leitung ist um das 5-10 fache größer als die vorgegebene Tiefe der Erkundung. Die Leitung ist mit einem Generator und mit den Messsensoren verbunden. Die Messsensoren sind an die Messgeräte angeschlossen. Nach der Einstellung der Geräte und der Kompensation der Signale des natürlichen Felds sowie der Eigenpolarisierung der Sensor-Elektroden in der Leitung wird das elektrische Feld induziert. Das elektrische Feld lässt die Stromimpulse durch. Am Ende jedes Impulses werden dabei die entsprechenden Signale der induzierten Polarisation in vorgegebenen Zeitabständen gemessen. Auf Grund der ermittelten Daten wird das Schnittprofil modelliert. Der Mangel des Verfahrens besteht in der niedrigen Leistung, was mit einem relativ engen Messbereich verbunden ist. Der Messbereich wird durch die Länge der Einspeisungsleitung bestimmt. Die komplexe Messanlage (RU 0048645, 2005) liegt der angemeldeten Gruppe der technischen Lösungen besonders nahe. Die Messanlage besteht aus einem Schiff. Auf dem Schiff ist ein Generator und eine Einheit zur Erzeugung des Treiberfelds angeordnet. Die beiden ermöglichen es, die Impulse diskret zu erzeugen. Darüber hinaus sind auf dem Schiff Mess- und Hilfsgeräte eingerichtet. Die Einheit zur Erzeugung des Treiberfelds ist mit einem ins Wasser versenkten Dipol mit Speiseelektroden verbunden. Das untere Ende des Dipols befindet sich im Abstand von max. 100 m vom Meeresboden. Für die Erfassung der Signale wird ein Satz der Bodenstationen verwendet. Als Bodenstationen werden einheitliche Elektro- oder Magnetbodenstationen mit flexiblen Stangen verwenden, auf welchen die Empfängerelektroden angeordnet werden. Die Stationen werden nach einem traditionellen Aufstellungsplan angeordnet, und zwar so, dass mindestens drei Stationen sich im Bereich des eventuellen Vorkommens und ein Teil der Stationen außerhalb dieses Bereichs befinden. Zur komplexen Messanlage gehören als Hilfseinrichtungen insbesondere

- eine Einheit des Selbstauftauchsystems für Bodenstationen,
- eine Ballasteinrichtung, welche die Zerstreuung der Leistung des Generators zwischen den Impulsen sicherstellt,
- paarweise ausgeführte unterschiedlich gerichtete elektrische Dipole mit gleichen Momenten,
- Geräte für die Ermittlung der Stelle des Schiffs, der Meerestiefe usw.

Das Messverfahren besteht darin, dass vor dem Auslaufen des Schiffs zum Punkt des Profilsanfangs und vor dem Aufstellen der Bodenstationen die Uhren der Einheit zur Erzeugung des Treiberfelds und der Bodenstationen synchronisiert werden. Die Bodenstationen werden entlang dem Messprofil an den vorher festgelegten Stellen so angeordnet, dass mindestens drei Stationen sich im Bereich des eventuellen Vorkommens, und ein Teil der Stationen außerhalb dieses Bereichs befinden. Nach dem Aufstellen der Stationen läuft das Schiff zur Stelle hinaus, die vom Anfang des Profils mindestens um die Meerestiefe entfernt ist. Die Generatorleitung wird vertikal so versenkt, dass die untere Speiseelektrode sich im Abstand von maximal 100 m vom Boden befindet. Dann wird die Einheit zur Erzeugung des Treiberfelds eingeschaltet. Sie erzeugt die zweipoligen Impulse mit den Pausen, die eine Polarisationswirkung auf die Gesteine des Meeresbodens haben. Während der Pausen wird an den Schiffsgenerator eine nicht strahlende Ballasteinrichtung angeschlossen, was die Spitzen des Belastungsstroms reduziert. Die Einheit zur Erfassung und Verarbeitung der Daten misst den Strom im Dipol mit der durch das Programm vorgegebenen Diskontinuität sowohl während des Impulses als auch in den Pausen zwischen den Impulsen und fixiert die Zeit des Anfangs und des Schlusses jedes Impulses. Die Bodenstationen registrieren das Signal mit gleicher Diskontinuität, wie die Einheit zur Erzeugung des Felds sowohl während des Impulses als auch in den Pausen zwischen den Impulsen. Auf Grund der ermittelten Daten, die sowohl die Leitfähigkeit als auch die Polarisierbarkeit der Gesteine des Meeresbodens charakterisieren, wird das Schnittprofil modelliert. Auf Basis des Profils wird die Schlussfolgerung gezogen, ob Öl- und Gasfelder vorhanden oder nicht vorhanden sind.

Der Mangel dieser Lösung besteht darin, dass es praktisch unmöglich ist, dieses Verfahren in der Transitzone des Schelfs bei einer Tiefe von unter 10 m anzuwenden. Das hängt damit zusammen, dass die Länge der Speiseelektrode bei diesen Tiefen nicht groß genug ist.

Es ist daher die Aufgabe der Erfindung ein Verfahren und eine Messanlage der eingangs erwähnten Art zu schaffen, das bzw. die in der Transitzone eines Schelfs eingesetzt werden kann und daher Daten auf Grund der Leitfähigkeit der Gesteine als auch deren Polarisierungsverhalten liefert.

Die generelle Aufgabe wird nach der Erfindung bei einem Verfahren dadurch gelöst, dass in der Einheit zur Erzeugung des magnetischen Treiberfeldes in der Generatorleitung und in den Bodenstationen Uhren angeordnet werden, die vor dem Eintauchen der Bodenstationen synchronisiert werden, dass die Generatorleitung von einem Schiff auf der Meeresoberfläche entlang dem Beoachtungsprofil geschleppt wird, dass die Anregung des magnetischen Treiberfeldes durch periodische Wechselimpulse mit unterschiedlicher Polarität mit Pausen zwischen den Impulsen vorgenommen wird, wobei die Daten mit Hilfe einer Gruppe von Mehrfach-Bodenstationen ermittelt werden, dass die Mehrfach-Bodenstationen mit Empfangsleitungen mit wenigstens drei Empfangselektroden ausgerichtet werden, wobei der Abstand der Empfangselektroden zwischen 50 - 500 m beklagt, dass die Bodenstationen gleichmäßig entlang dem ganzen Profil der Erkundung angeordnet werden und die zeitliche Zerlegung der Signale erfassen, dass die Differenzen der Potentiale und die räumlichen Ableitungen des Treiberfeldes im Moment der Stromdurchleitung sowie bei fehlendem Strom erfasst werden, dass bei der Analyse der Signale nicht nur die zeitlichen Änderungen der primären auch der sekundären Felder berücksichtigt werden und dass neben den Daten, die der Widerstand des Mediums charakterisieren, auch die Polarisationsverhalten ermittelt werden.

Die wesentlichen Merkmale der Erfindung können wie folgt umschrieben werden:

Die Generatorleitung wird auf der Meeresoberfläche hinter dem Schiff geschleppt. Das Treiberfeld wird mit Hilfe periodischer Wechselstromimpulse rechteckiger Form erzeugt. Die zeitgemäße Zerlegung der Signale wird mittels der Mehrfach-Bodenstationen erfasst. Die Bodenstationen sind mit Empfängerleitungen (Litzen) ausgestaltet, die mindestens drei Empfangselektroden haben. Der Abstand der Empfangselektroden beträgt 50 - 500 m. Die Bodenstationen erfassen die Potentialdifferenzen und die räumlichen Ableitungen des elektromagnetischen Treiberfeldes beim anliegendem und bei fehlendem Strom. Bei der Analyse der Signale wird die zeitliche Veränderung nicht nur der primären, sondern auch der sekundären Felder berücksichtigt. Es wird nicht nur der Widerstand des Mediums, sondern auch sein Polarisierungsverhalten ermittelt.

Die Messanlage zur Durchführung des Verfahrens ist dadurch gekennzeichnet, dass die Erfassung des Treiberfeldes durch Mehrfach-Bodenstationen mit Hilfe deren Empfangsleitungen erfolgt, die wenigstens drei Empfangselektroden im Abstand von 50 - 500 m aufweisen und dass die Bodenstationen die Potentiale des Treiberfeldes und deren räumliche Ableitung entlang des Untersuchungsprofils registrieren.

Eine gleichzeitige Bestrahlung von $\Delta U$ und $\Delta^2 U$ ermöglicht es, die räumlich-zeitliche Struktur des Treiberfeldes umfassender zu untersuchen und erhöht die Zuverlässigkeit und die Gültigkeit der Ermittlung aller Parameter des Profilschiffs. Dabei entsteht die Möglichkeit, gleichzeitig mehrere Profile der Untersuchung zu bilden.

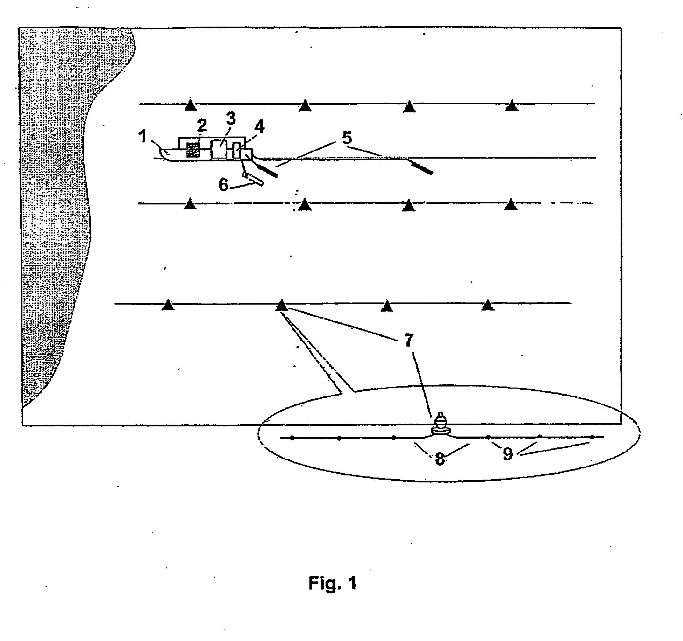

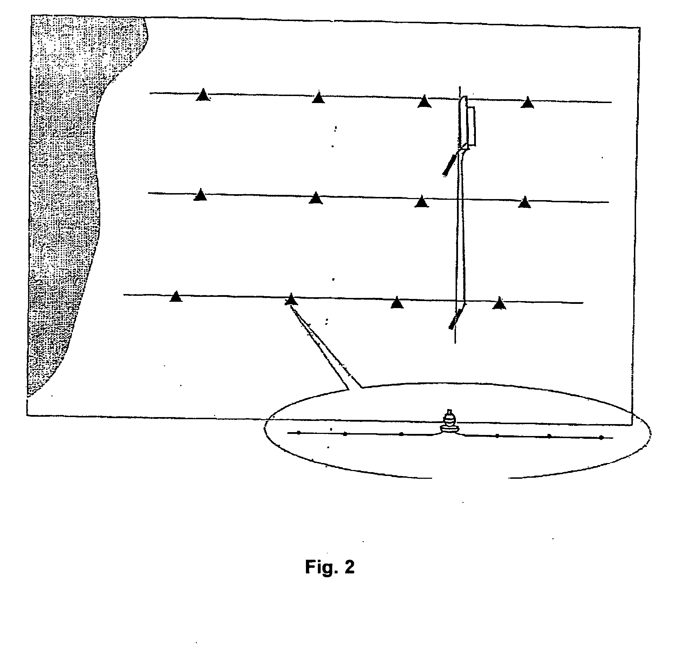

Die Litzen werden parallel oder senkrecht zur Leitung der Anregung angeordnet. Das Generatordipol (Fig. 1 und 2) wird entlang dieser Anregungsleitung geschleppt. Eine konkrete Anordnung der Litzen wird durch die jeweiligen Eigenschaften des Messbereichs festgelegt. Die Kombination des Generators der Diskretimpulse, des geschleppten horizontalen Depots und der Litzen mit Erfassungselektroden sorgt für die Ermittlung der Daten, die die Information nicht nur über den Widerstand der Tiefschichten der Gesteine, sondern auch über deren Polarisierungsverhalten enthalten. Das ermöglicht es, eine bessere Prognose über eventuelle Vorkommen der Kohlenstoffe im Untersuchungsgebiet zu stellen.

Die Erfindung wird anhand von in den Zeichnungen dargestellten Ausführungsbeispielen näher erläutert. Es zeigen:

Fig. 1 ein Übersichtsschema einer komplexen Messanlage, bei der sich das Schiff parallel zu den Litzen bewegt,

Fig. 2 ein Funktionsschema der komplexen Messanlage, bei der sich das Schiff senkrecht zu den Litzen bewegt,

Fig. 3 die Beziehung zwischen $\Delta U$ zwischen den Elektroden M und N und der Messzeit für unterschiedliche Verteilungen für die koaxiale Anordnung der Generatorelektrode und der Anordnungslinie der Litzen,

Fig. 4 die Beziehung des Verhältnisses $\Delta^2 U/\Delta U$ und der Messzeit für unterschiedliche Verteilungen für die koaxiale Anordnung der Generatorelektrode und der Anordnung der Litzen, wobei $\Delta^2 U$ die Differenz zwischen den Signalen an den Elektrodenpaaren MO und ON ist,

Fig. 5 die Beziehung zwischen $\Delta U$ zwischen den Elektroden M und N und der Messzeit für unterschiedliche Verteilungen für die senkrechte Anordnung der Generatorelektrode und der Anordnungslinie der Litzen und

Fig. 6 die Beziehung des Verhältnisses $\Delta^2 U/U$ und der Messzeit für unterschiedliche Verteilungen der Generatorelektrode und der Anordnungslinie der Litzen, wobei $\Delta^2 U$ die Differenz zwischen den Signalen an den Elektrodenpaaren MO und ON ist.

In Fig. 1 werden folgende Bezeichnungen verwendet. 1 ist ein kleines Schiff, auf dem ein Schiffsgenerator 2, eine Einheit 3 zur Erzeugung des anregenden Felds 3 und eine Einheit 4 zur Daten-Erfassung und -Verarbeitung angeordnet sind. Mit 5 ist eine schleppbare Generatorleitung (Dipol) und mit 6 eine Ballasteinrichtung gezeigt. Die Bodenstation 7 ist mit einer Empfangsleitung 8 (Litze) mit Empfangselektroden 9 versehen.

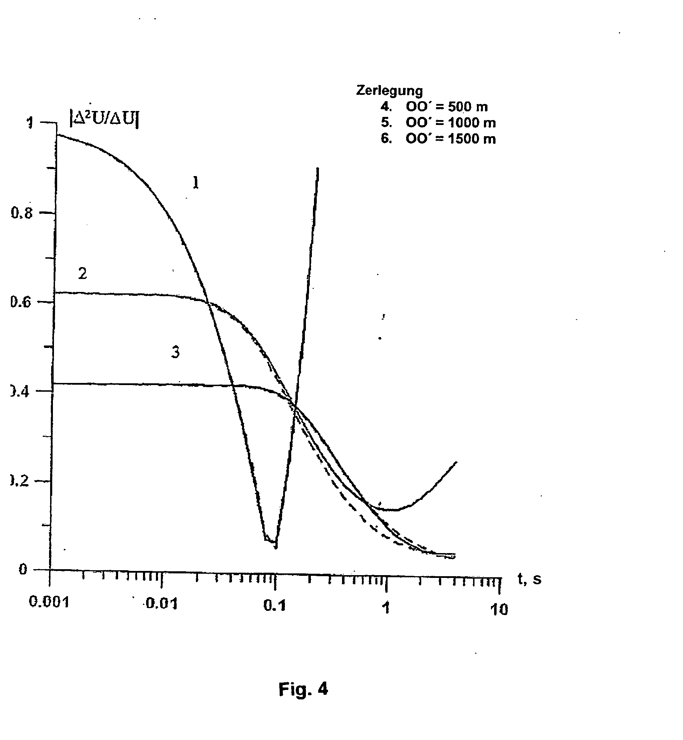

In den Fig. 4 bis 6 werden die vollen Linien für die Berechnung des Modells mit einem Vorkommen und veränderten Gesteinen verwendet. Die Punktlinie zeigt den Hintergrund an.

## Die beste Ausführungsvariante der Erfindung

Die Messungen werden in einer Tiefe von 0 bis 10 m anhand von einem Profilsystem vorgenommen. Dabei können die Profile sowohl entlang als auch senkrecht zur Meeresküste verlaufen.

Die komplexe Messanlage funktioniert folgendermaßen:

Vor dem Beginn der Arbeiten wurden die Empfangsleitungen 8 entlang dem Untersuchungsprofil mit Hilfe kleiner Hilfsschiffe so ausgelegt, dass die Empfangselektroden 9 an bestimmten, vorher festgelegten Stellen angeordnet sind. Die Lage der Empfangselektroden 9 wird nach den Angaben der GPS-Empfänger überwacht. Die Hauptenden der Empfangsleitungen 8 werden an die Bodenstation 7 angeschlossen.

Die Bodenstation 7 wird auf dem Boden installiert und mit der Uhr in der Einheit zur Erzeugung des Feldes (Treiberfeldes) nach den Referenzsignalen (z.B. Signal PPS des GPS-Systems) synchronisiert. Ein oder mehrere Profile können gleichzeitig mit Bodenstationen 7 mit Empfangsleitungen 8 ausgestattet sein. Ein Teil der Bodenstationen 7 können auf Null-Tiefe (an der Küste) angeordnet sein. Nachdem die Aufstellung der Bodenstationen 7 abgeschlossen ist, läuft das kleine Schiff 1 zur Anfangsstelle des Anregungsprofils aus. Die Richtung des Profils kann mit der Richtung des Untersuchungsprofils zusammenfallen oder senkrecht zu diesem stehen. Die Anregung erfolgt durch die Generatorleitung 5, die vom kleinen Schiff 1 geschleppt wird. Vor dem Schlepper wird auf der Basis des Generators 2 die Einheit 3 zur Erzeugung des Treiberfeldes angefahren, die rechteckige Impulse unterschiedlicher Polung mit vorgegebener Dauer und Impulsschaltverhältnis abgibt. Dies hat eine polarisierende Wirkung auf die Gesteine des Schelfs. Die Dauer der Impulse und Pausen beträgt je nach den gestellten Aufgaben und Besonderheiten der verwendeten Geräte 0,5 bis 16 Sekunden. Während der Pausen wird an den Schiffsgenerator 2 in der Regel eine nicht strahlende Ballasteinrichtung 6 angeschlossen, was die Spitzen der Belastungen des Schiffsgenerators 2 reduziert. Die Einheit 4 zur Erfassung und Verarbeitung der Daten misst den Strom im Dipol 5 mit softwaremäßig vorgegebener Diskontinuität sowohl während des Impulses als auch in den Pausen zwischen den Impulsen und fixiert die Zeit des Anfangs und des Abschlusses jedes Impulses. Dabei erfassen die Bodenstationen 7 die Zeitreihen mit den Daten. Diese Daten umfassen die Potentialdifferenzen zwischen den Elektroden, sowie die sekundären Differenzen, die der räumlichen Ableitung des Feldes gleich sind. Nach dem Ende der Untersuchung des Untersuchungsprofils werden die Empfangsleitungen 8 und die Bodenstationen 7 an Bord des Schiffs 1 geholt und die Daten der Bodenstationen 7 in der Einheit 4 zur Erfassung und Verarbeitung der Daten zwecks weiterer Verarbeitung gespeichert und der Zyklus wiederholt sich. Die ermittelten Ergebnisse werden bearbeitet. Daher wird bei der Interpretation die Information über das Feld sowohl während der Stromdurchschaltung als auch in den Pausen zwischen den Impulsen verwendet. Die Signale, welche durch die Bodenstationen 7 gemessen wurden, dienen als Informationsquelle. Mit Hilfe der Modellierung werden somit die Informationen über die Veränderung sowohl der Widerstands-Parameter als auch der Parameter der induzierten Polarisation und die Tiefe der Lageruhg der Gesteine ermittelt. Um die Zukunftsaussichten des Verfahrens einzuschätzen, wurde eine mathematische Modellierung vorgenommen.

Die Aufgabe würde nämlich bei folgenden Ausgangsangaben gelöst: Meerestiefe 5 m, Länge des horizontalen elektrischen Dipols mit dem Mittelpunkt O', welcher über die Bodenoberfläche geschleppt wird - 500 m, Stromstärke - 100 A. Die Messlitze besteht aus drei Elektroden M 400 m, O 400 m N, O - ist der Mittelpunkt der Einrichtung. Das Modell des Mediums imitiert ein Meeresvorkommen der Kohlenstoffe, wird für die theoretischen Berechnungen verwendet und besteht aus fünf Schichten. Die Parameter jeder Schicht des Modells wurden nach der Cole-Cole Formel vorgegeben:

$$\rho_j^{\omega} = \rho_j^{0}(1 - \eta_j) \Big/ \left(1 - \eta_j \frac{1}{1 + (-i\omega\tau_j)^{c_j}}\right),$$

wobei gilt Folgendes:

$p^{\omega}$ ist der elektrische Einheitswiderstand bei der Frequenz $\omega$,
$\eta$ ist die Polarisierbarkeit,
$\tau$ ist die Zeitkonstante und
c ist der Exponent,
j ist die Nummer der Schicht.

Die Parameter der Schichten sind in der Tabelle angeführt.

| Nummer der Schicht | Parameter | | | | |
|---|---|---|---|---|---|
| | $\rho$, Ohm | $\eta$, % | $\tau$, s | c | h (Leistung, m) |
| 1 | 0.3 | 0 | - | - | 5 |
| 2 | 1 | 0.5 | 0.1 | 0.5 | 100 |
| 3 | 1 | 5 | 1 | 0.5 | 1900 |
| 4 | 50 | 0 | - | - | 100 |
| 5 | 1 | 0.5 | 0.1 | 0.5 | 100 |

Die theoretischen Berechnungen werden für zwei Messvarianten durchgeführt. Im ersten Fall liegen die Generatorleitung 5 und das Profil mit Bodenstationen 7 koaxial. Die Abstände betragen OO' = 500, 1000 und 1500 m. Im zweiten Fall bewegt sind das horizontale elektrische Dipol entlang dem Profil, das normal zur Linie MON liegt. Das Profil überquert diese Linie im Abstand von 1000 m. Die Abstände zwischen dem Kreuzungspunkt und dem Mittelpunkt O' betragen 250, 500, 1000 m.

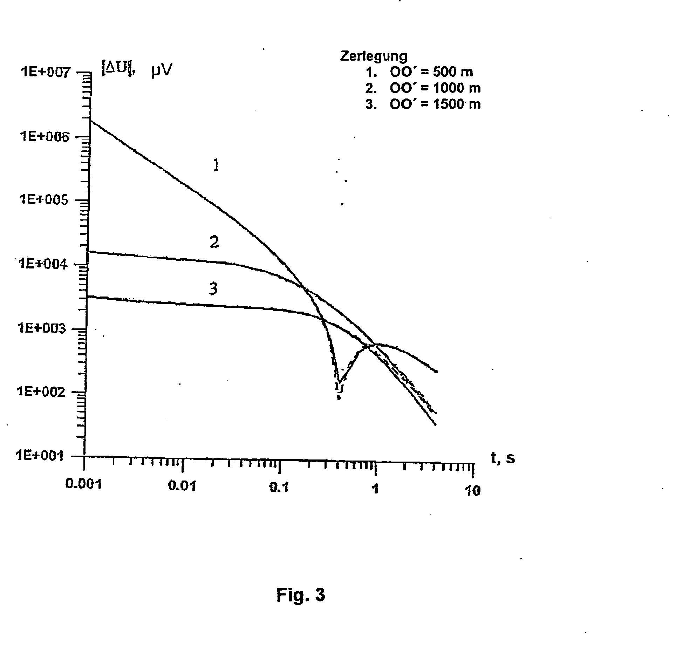

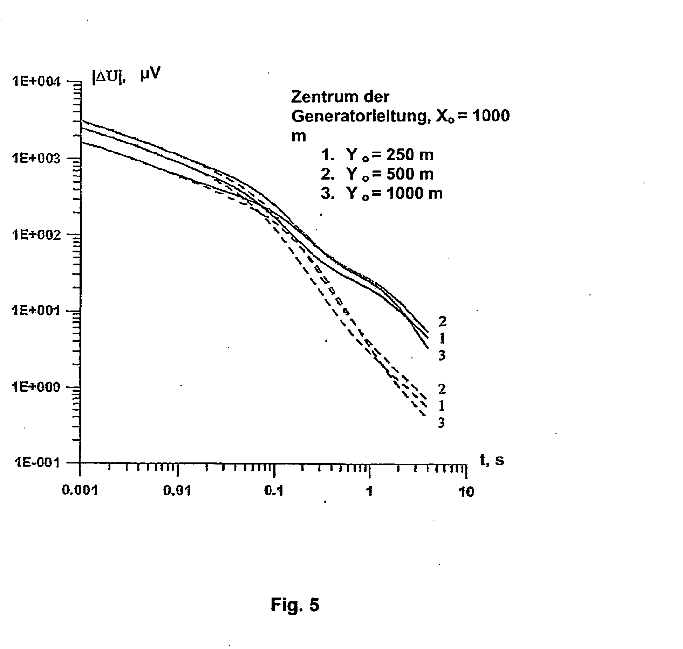

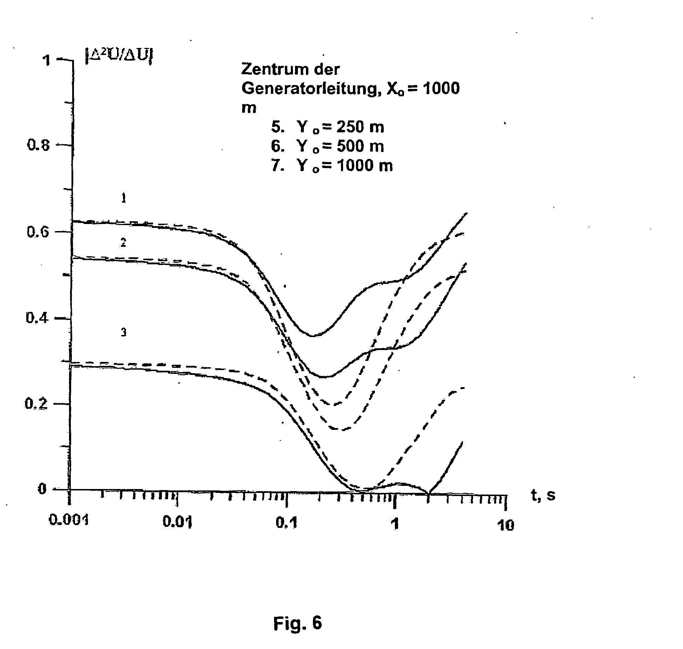

Es wurden folgende Größen berechnet: Signale $\Delta U$ zwischen den Elektroden M und N und das Verhältnis $\Delta^2 U / \Delta U$, wo $\Delta^2 U$ die Differenz zwischen den Signalen ist, die an den Elektrodenpaaren MO und ON gemessen werden. Die Ergebnisse sind in Fig. 3 und 4 für eine koaxiale Stellung des horizontalen elektrischen Dipols und der Messlinie und in Fig. 5 und 6 für eine orthogonale Anordnung dargestellt. Volle Linien stellen das Modell mit einem Vorkommen und den veränderten Gesteinen dar. Die Punktlinien schildern den Hintergrund. Wie es aus den angeführten Daten ersichtlich ist, zeigt sich die anomale Zone unterschiedlich in den Signalen an. Die Anwendung von einem breiten räumlichen und zeitlichen Bereichs ermöglicht es, das Schnittprofil wiederherzustellen, und zwar sowohl nach dem Widerstand als auch nach den Parametern der Polarisation.

**Patentansprüche**

1.  Verfahren zur elektrischen Erkundung der Öl- und Erdgasfelder im Meer mit im Erkundungsgebiet angeordneten Bodenstationen, wobei im Bereich der Aufstellung der Bodenstationen mit Hilfe einer Generatorleitung ein elektromagnetisches Feld erzeugt wird und die von den Empfangselektroden der Bodenstationen erfassten Signale aufgenommen werden und wobei die erfassten Signale der Bodenstationen Informationen über den elektrischen Widerstand der Meeresbodengesteine enthalten und darüber die Modellierung des Profils dieser Gesteine und eine Prognose über das Vorhandensein von Kohlenstoff abgeleitet wird,
**dadurch gekennzeichnet,**
**dass** in der Einheit (3) zur Erzeugung des magnetischen Treiberfeldes in der Generatorleitung (5) und in den Bodenstationen (7) Uhren angeordnet werden, die vor dem Eintauchen der Bodenstationen (7) synchronisiert werden, dass die Generatorleitung (5) von einem Schiff (1) auf der Meeresoberfläche entlang dem Beoachtungsprofil geschleppt wird, dass die Anregung des magnetischen Treiberfeldes durch periodische Wechselimpulse mit unterschiedlicher Polarität mit Pausen zwischen den Impulsen vorgenommen wird, wobei die Daten mit Hilfe einer Gruppe von Mehrfach-Bodenstationen (7) ermittelt werden, dass die Mehrfach-Bodenstationen (7) mit Empfangsleitungen (8) mit wenigstens drei Empfangselektroden (9) ausgerichtet werden, wobei der Abstand der Empfangselektroden (9) zwischen 50 - 500 m beträgt, dass die Bodenstationen (7) gleichmäßig entlang dem ganzen Profil der Erkundung angeordnet werden und die zeitliche Zerlegung der Signale erfassen, dass die Differenzen der Potentiale und die räumlichen Ableitungen des Treiberfeldes im Moment der Stromdurchleitung sowie bei fehlendem Strom erfasst werden, dass bei der Analyse der Signale nicht nur die zeitlichen Änderungen der primären auch der sekundären Felder berücksichtigt werden und dass neben den Daten, die der Widerstand des Mediums charakterisieren, auch die Polarisationsverhalten ermittelt werden.

2. Komplexe Messanlage für elektrische Meereserkundung der Öl- und Erdgasfelder, die aus folgenden Komponenten besteht:

  ein Transportmittel (Schiff 1) mit folgenden Geräten:

  eine Einheit (3) zur Erzeugung diskreter zweipoliger Generatorimpulse, eine nicht strahlende Ballasteinrichtung (6) und einer Gerätetechnik zum Ablesen und Speichern der Daten von Bodenstationen (7) sowie zur Erfassung der Stelle und Zeit der Erzeugung der Stromimpulse und der Initialisierung der Bodenstationen (7) sowie einer schleppbaren horizontalen Generatorleitung (5),
  **dadurch gekennzeichnet,**
  **dass** die Erfassung des Treiberfeldes durch Mehrfach-Bodenstationen (7) mit Hilfe deren Empfangsleitungen (8) erfolgt, die wenigstens drei Empfangselektroden (9) im Abstand von 50 - 500 m aufweisen und dass die Bodenstationen (7) die Potentiale des Treiberfeldes und deren räumliche Ableitung entlang des Untersuchungsprofils registrieren.

3. Komplexe Messanlage nach Anspruch 2,
**dadurch gekennzeichnet,**
**dass** die Länge der Empfangsleitungen (Litzen) 100 - 3000 m beträgt.

## Claims

1. Method for electrically surveying the oil and natural gas fields in the sea by means of ground stations arranged in the survey region, an electromagnetic field being generated by means of a generator cable in the region where the ground stations are set up, and the signals detected by the receiving electrodes of the ground stations being received, and the detected signals of the ground stations containing information about the electrical resistance of the rocks on the seabed, and the shaping of the profile of said rocks and a prediction regarding the presence of carbon being derived therefrom, **characterised in that** clocks are arranged in the unit (3) for generating the magnetic driver field in the generator cable (5) and in the ground stations (7), which clocks are synchronised before the ground stations (7) are immersed, **in that** the generator cable (5) is towed on the surface of the sea along the observation profile by a ship (1), **in that** the excitation of the magnetic driver field is carried out by cyclical alternating pulses having different polarities with breaks between the pulses, the data being determined by means of a group of multiple ground stations (7), **in that** the multiple ground stations (7) are oriented by means of receiving cables (8) having at least three receiving electrodes (9), the spacing of the receiving electrodes (9) being between 50 and 500 m, **in that** the ground stations (7) are arranged at regular intervals along the entire profile of the survey and detect the decomposition of the signals over time, **in that** the differences in the potentials and the spatial dissipations of the driver field are detected at the moment when electricity is transmitted and when there is an absence of electricity, **in that** when the signals are analysed, not only the temporal changes of the primary, but also the secondary fields are taken into account, and **in that** in addition to the data that characterise the resistance of the medium, the polarisation behaviour is also determined.

2. Complex measuring system for an electrical marine survey of the oil and natural gas fields, consisting of the following components:

a transport means (ship 1) having the following equipment:

a unit (3) for generating discrete bipolar generator pulses, a non-radiating ballast device (6) and a piece of equipment for reading and storing the data from ground stations (7) and for detecting where and when the current pulses are generated and the ground stations (7) are initialised, as well as a towable horizontal generator cable (5),
**characterised in that** the detection of the driver field is carried out by multiple ground stations (7) by means of the receiving cables (8) thereof, which have at least three receiving electrodes (9) which are spaced apart by 50 to 500 m, and **in that** the ground stations (7) record the potentials of the driver field and the spatial dissipation thereof along the investigation profile.

3. Complex measuring system according to claim 2, **characterised in that** the length of the receiving cables (wires) is from 100 to 3000 m.

**Revendications**

1. Procédé de prospection électrique des champs de pétrole et de gaz naturel en mer avec des stations de fond de mer agencées dans la zone de prospection, dans lequel un champ électromagnétique est produit dans la région d'implantation des stations de fond de mer à l'aide d'une ligne de générateur et les signaux détectés par les électrodes réceptrices des stations de fond de mer sont enregistrés, et dans lequel les signaux détectés des stations de fond de mer contiennent des informations sur la résistance électrique des roches du fond de la mer et la modélisation du profil de ces roches ainsi qu'un pronostic sur l'existence de carbone en est déduit,
**caractérisé en ce que** dans l'unité (3) de production du champ magnétique moteur dans la ligne de générateur (5) et, dans les stations de fond de mer (7), des horloges sont agencées, qui sont synchronisées avant l'immersion des stations de fond de mer (7), **en ce que** la ligne de générateur (5) est traînée par un bateau (1) à la surface de la mer le long du profil d'observation, **en ce que** l'excitation du champ magnétique moteur est effectué par des impulsions alternatives périodiques avec une polarité différente, avec des pauses entre les impulsions, dans lequel les données sont déterminées à l'aide d'un groupe de stations de fond de mer multiples (7), **en ce que** les stations de fond de mer multiples (7) sont alignées avec des lignes de réception (8) avec au moins trois électrodes réceptrices (9), dans lequel la distance entre les électrodes réceptrices (9) est entre 50 et 500 m, **en ce que** les stations de fond de mer (7) sont agencées régulièrement le long de tout le profil de prospection et déterminent la décomposition temporelle des signaux, **en ce que** les différences entre les potentiels et les dérives spatiales du champ moteur au moment du passage du courant ainsi que lors de l'absence de courant sont détectées, **en ce que**, lors de l'analyse des signaux, non seulement les variations temporelles des champs primaires ainsi que des champs secondaires sont prises en compte et **en ce que**, en plus des données qui caractérisent la résistance du milieu, les comportements de la polarisation sont également déterminés.

2. Installation de mesure complexe pour la prospection maritime électrique des champs de pétrole et de gaz naturel, constituée des composants suivants :

un moyen de transport (bateau 1) avec les appareils suivants :

une unité (3) pour la production d'impulsions de générateur bipolaires discrètes, un dispositif de ballast (6) non rayonnant et une technologie des appareils permettant de lire et d'enregistrer les données de stations de fond de mer (7) ainsi que de déterminer le lieu et le moment de la production des impulsions de courant et de l'initialisation des stations de fond de mer (7) ainsi que d'une ligne de générateur horizontale tractable (5),
**caractérisée en ce que** la détection du champ moteur par des stations de fond de mer multiples (7) a lieu à l'aide de leurs lignes de réception (8) qui présentent au moins trois électrodes réceptrices (9) à une distance de 50 à 500 m, et **en ce que** les stations de fond de mer (7) enregistrent les potentiels du champ moteur et sa dérive spatiale le long du profil examiné.

3. Installation de mesure complexe selon la revendication 2, **caractérisée en ce que** la longueur des lignes de réception (torons) est de 100 à 3 000 m.

**Fig. 1**

**Fig. 2**

**Fig. 3**

Fig. 4

**Fig. 5**

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- RU 2236028
- SU 1122998
- SU 1798666
- SU 1434385
- US 4298840 A
- US 4617518 A
- RU 2069375
- RU 0048645